# FASCICULE DE BREVET EUROPEEN

(11) **EP 1 759 959 B1**
(45) Date de publication et mention de la délivrance du brevet: **23.09.2009**
(21) Numéro de dépôt: 06300748.8
(22) Date de dépôt: 03.07.2006
(51) Int. Cl.: B62D 21/15, B62D 29/00

(54) **Insert de renforcement pour caisse de véhicule automobile**
Verstärkungsteil für ein Kraftfahrzeug-Chassis
Reinforcing insert for a vehicle chassis

(30) Priorité: 06.09.2005 FR 0509088
(43) Date de publication de la demande: 07.03.2007
(73) Titulaire: Peugeot Citroën Automobiles SA, 78140 Vélizy-Villacoublay (FR)
(72) Inventeur: Patois, Christophe, 25310 Thulay (FR); Kauffmann, Michel, 25460 Etupes (FR); Saillet, Philippe, 25700 Valentigney (FR)

(56) Documents cités:
- US-B2- 6 435 601
- PATENT ABSTRACTS OF JAPAN vol. 1997, no. 08, 29 août 1997 (1997-08-29) -& JP 09 099863 A (TOYOTA MOTOR CORP), 15 avril 1997 (1997-04-15)
- PATENT ABSTRACTS OF JAPAN vol. 2002, no. 11, 6 novembre 2002 (2002-11-06) -& JP 2002 211436 A (SUZUKI MOTOR CORP), 31 juillet 2002 (2002-07-31)

## Description

L'invention concerne un insert de rigidification pour caisse de véhicule automobile, destiné à être monté dans une cavité délimitée par au moins deux tôles soudées l'une à l'autre.

Afin de respecter les normes en vigueur en matière de déformation de la caisse suite à un choc correspondant par exemple à un accident, la caisse des véhicules automobiles comprend un ou plusieurs inserts de rigidification destinés à réduire ces déformations.

Un tel insert est monté à la jonction de deux éléments structuraux de la caisse, ces éléments structuraux étant par exemple un longeron et un pied avant de la caisse qui constituent des poutres creuses.

Ces éléments ainsi que leur jonction sont formés par différentes tôles assemblées par soudage des bords respectifs de ces tôles, ce qui délimite la zone creuse ou cavité, notamment au niveau de la jonction en elle-même.

L'insert de rigidification est par exemple une pièce en matière plastique formée d'une ou plusieurs parois renforcées par des nervures, qui définit une forme générale tridimensionnelle complémentaire de la cavité dans laquelle il est monté.

Cet insert est rigidement fixé à une ou plusieurs des tôles délimitant la cavité dans laquelle il est monté pour réduire leurs déformations. Dans le cas d'un insert renforçant une jonction entre un longeron et un pied avant perpendiculaire à ce longeron, l'inclinaison prise par le pied sous l'effet du choc est diminuée par la présence de l'insert.

L'efficacité d'un tel insert est conditionnée par sa fixation aux tôles qui l'entourent. A cet effet, un tel insert est généralement fixé par collage, en étant enduit de colle et positionné dans l'une des tôles avant soudage des tôles complémentaires.

Compte tenu des dispersions géométriques importantes de l'assemblage de tôles soudées, la colle utilisée est une colle moussante, c'est à dire capable de combler des interstices plus ou moins importants et pouvant varier de façon significative entre une caisse et une autre.

Mais cette colle moussante doit également assurer une cohésion optimale entre la tôle et l'insert, de sorte qu'il s'agit d'une colle ayant un coût très important.

Un insert de rigidification analogue conforme au préambule de la revendication 1 est connu de JP 09 0997863 A.

Le but de l'invention est de remédier à cet inconvénient en proposant un insert pouvant être fixé à moindre coût.

A cet effet, l'invention a pour objet un insert de rigidification pour caisse de véhicule automobile, destiné à être inséré dans une cavité délimitée par au moins deux tôles soudées l'une à l'autre et par une tôle de renfort s'étendant entre ces deux tôles, cet insert ayant une extrémité apte à venir en appui contre une tranche de la tôle de renfort, et caractérisé en ce que cette extrémité porte au moins un doigt de blocage apte à venir en appui contre un flanc de la tôle de renfort.

Selon une caractéristique de l'invention, chaque doigt est porté par une face plane de l'extrémité de l'insert.

Selon une autre caractéristique de l'invention, l'insert comprend au moins deux doigts aptes à venir en appui sur deux flancs opposés de la tôle de renfort.

Selon une autre caractéristique de l'invention, l'insert comprend trois doigts disposés en quinconces.

Selon une autre caractéristique, de l'invention, au moins un doigt de l'insert comprend une zone d'encollage.

Selon une autre caractéristique de l'invention, l'insert a une forme générale correspondant à la lettre T pour rigidifier une embase de pied milieu de caisse en étant intercalé au moins partiellement entre un côté de caisse et un longeron intérieur.

Selon une autre caractéristique de l'invention, l'insert a une forme générale d'équerre pour rigidifier une embase de pied avant de caisse en étant intercalé au moins partiellement entre un côté de caisse et un longeron intérieur.

L'invention sera maintenant décrite plus en détail, et en référence aux dessins annexés qui en illustrent une forme de réalisation à titre d'exemple non limitatif.
La figure 1 est une vue d'ensemble d'une jonction renforcée par un insert à trois doigts selon l'invention ;
La figure 2 est une vue en coupe transversale de la jonction de la figure 1 au niveau des doigts ;
La figure 3 est une vue en perspective des doigts de l'insert des figures 1 et 2 ;
La figure 4 est une vue d'ensemble d'une jonction renforcée par un insert à un doigt selon l'invention ;
La figure 5 est une vue en coupe transversale de la jonction de la figure 4 au niveau du doigt.

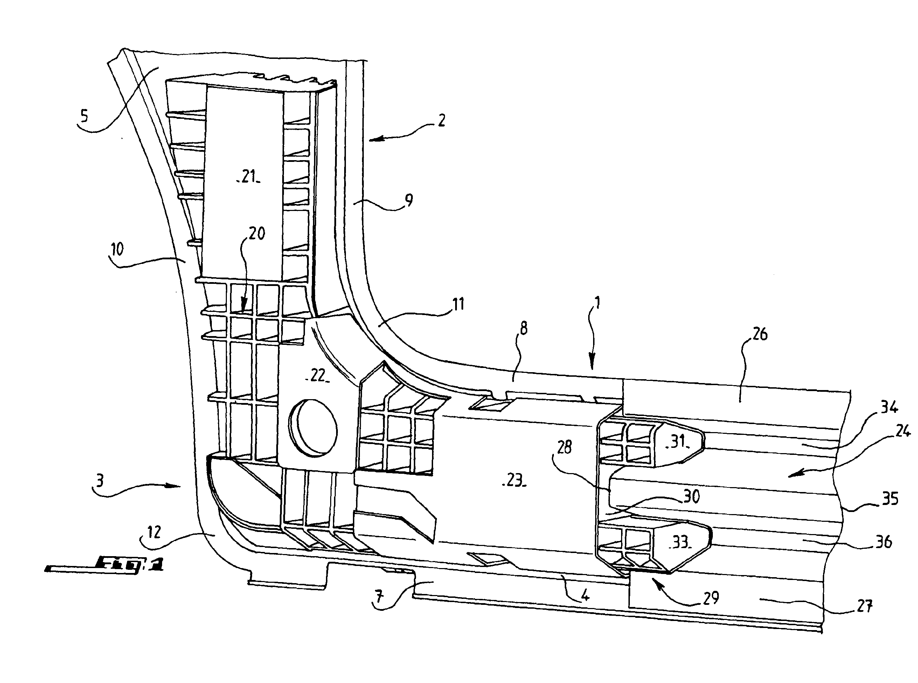

La figure 1 est une vue d'une partie de caisse de véhicule automobile correspondant à une jonction entre un longeron 1 s'étendant horizontalement et un pied avant 2 s'étendant verticalement. Cette figure 1 est un vue interne, c'est-à-dire représentant la jonction telle que vue depuis l'intérieur de la caisse.

Dans l'exemple de la figure 1, le longeron 1 et le pied avant 2 sont délimités, vers l'extérieur du véhicule par une même tôle appelée côté de caisse 3, qui a localement une forme générale de L. Ce côté de caisse 3 a une forme concave qui s'étend vers l'arrière du plan de la figure 1.

Ce côté de caisse 3 comprend une partie inférieure 4, et une partie supérieure 5 s'étendant à angle droit par rapport à la partie inférieure, et partant d'une extrémité de cette partie inférieure 4. La partie inférieure 4 s'étend horizontalement, elle correspond au longeron 1, et est délimitée en partie basse par un bord horizontal inférieur 7, et vers le haut par un bord horizontal supérieur 8.

Cette partie inférieure 4 est prolongée par la partie supérieure 5 qui s'étend verticalement et correspond au pied avant 2. Cette partie supérieure est délimitée d'une part par un bord vertical arrière 9 prolongeant le bord horizontal supérieur 8, et d'autre part par un bord vertical avant 10 prolongeant le bord horizontal inférieur 7.

Le bord vertical arrière 9 rejoint le bord horizontal supérieur 8 au niveau d'une première zone courbe 11, et le bord vertical avant 10 rejoint le bord horizontal inférieur 7 au niveau d'une seconde zone courbe 12. Les zones courbes 11 et 12 délimitent sensiblement la jonction entre le longeron 1 et le pied avant 2, elles correspondent à l'embase du pied avant 2.

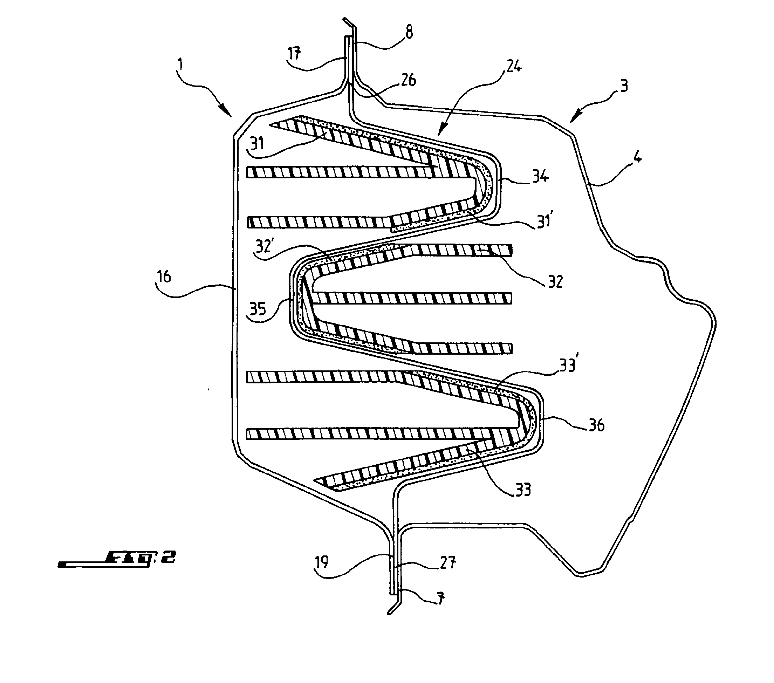

La partie inférieure 4 est complétée par une tôle appelée longeron intérieur, qui est repéré par 16 sur la figure 2, pour former une poutre creuse constituant le longeron 1. Ce longeron intérieur 16 est également délimité par un bord supérieur 17 et par un bord inférieur 18. Il est solidarisé à la partie inférieure 4 par soudage de ses bords inférieur et supérieur, respectivement au bord horizontal inférieur et supérieur 7 et 8.

De façon analogue, la partie supérieure 5 est également complétée par un montant intérieur appelé doublure d'aile avant, non représentée, qui a ses bords soudés aux bords verticaux arrière et avant 9 et 10 pour former le pied avant 2.

Le longeron 1 et le pied avant 2 constituent ainsi deux poutres creuses s'étendant dans le prolongement l'une de l'autre en étant disposées en L, et définissant une cavité interne y compris au niveau de leur jonction.

Comme visible en figure 1, la jonction du longeron 1 et du pied avant 2 est rigidifiée par un insert 20 qui est placé dans la cavité délimitée par ce pied milieu et ce longeron, au niveau de leur jonction.

Cet insert 20 est par exemple positionné dans le côté de caisse 3 avant assemblage du longeron intérieur 16 et de la doublure d'aile par soudage de leurs bords respectifs aux bords du côté de caisse. Après soudage, cet insert 20 est ainsi prisonnier de la cavité qu'il renforce.

L'insert 20 est ici fabriqué en matière plastique, et a une forme générale complémentaire de la cavité dans laquelle il est monté. Il comprend principalement une ou plusieurs parois, qui sont rigidifiées par des nervures internes définissant localement une structure renforcée proche d'une structure de type nid d'abeilles.

Cet insert 20 a une forme générale correspondant à la lettre L, et il comprend différentes parois externes, repérées par 21, 22 et 23 qui sont réparties pour longer le longeron intérieur 16, la doublure d'aile avant, et le côté de caisse 3, lorsque l'insert est en place.

Ces parois 21, 22 et 23 sont encollées avec une colle moussante spécifique, pour assurer qu'après montage, l'insert soit solidarisé aux tôles.

Le blocage de l'insert 20 est complété par une tôle de renfort 24 située dans le longeron 1, à une certaine distance du pied avant 2. Cette tôle de renfort 24 est située entre la partie inférieure 4 du longeron, et le longeron intérieur 16. Elle présente des bords 26 et 27 qui sont soudés aux bords horizontal inférieur et supérieur 7 et 8, dans une zone arrière du côté de caisse 3.

Cette tôle de renfort 24 constitue un arrêtoir de l'insert 20 en ayant une tranche 28 qui s'étend dans un plan transversal du longeron 1, et contre laquelle une extrémité arrière 29 de l'insert 20 vient en appui.

En cas de choc, cet arrêtoir empêche un déplacement de l'insert 20 vers l'arrière du véhicule, pour qu'il assure sa fonction de rigidification.

L'extrémité arrière 29 de l'insert 20 comprend une face plane 30 s'étendant transversalement et venant en appui contre la tranche 28. Cette face plane 30 porte trois doigts, repérés par 31, 32 et 33 qui entourent la tôle de renfort 24 en s'étendant de part et d'autre de cette tôle. Chaque doigt s'étend selon une direction normale à celle de la face 30, et définit une surface latérale venant en appui contre un flanc de la tôle de renfort 24 de façon à bloquer l'extrémité arrière 29 transversalement sur ce renfort 24.

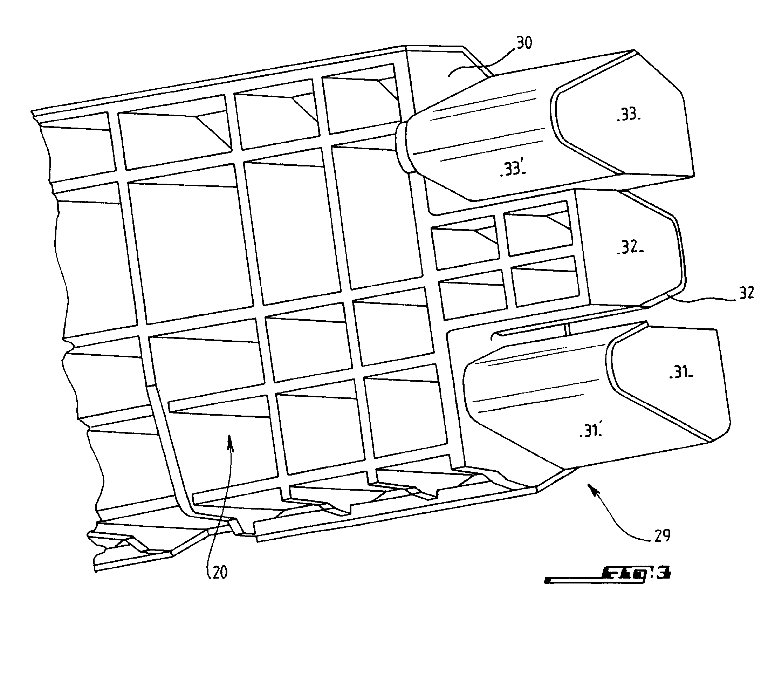

Ces trois doigts 31, 32 et 33 qui sont visibles dans la vue en perspective figure 3 sont positionnés en quinconces sur la face plane 30. De façon complémentaire, la tôle de renfort 24 a une forme définissant trois ondulations 34, 35 et 36 dans lesquelles viennent s'engager respectivement les doigts 31, 32 et 33.

Les ondulations 34, 35 et 36 donnent à la tôle de renfort 24 une section transversale correspondant à la lettre W, comme visible figure 2.

Comme visible dans les figures 1 et 2, les doigts et les ondulations s'étendent longitudinalement, ces ondulations définissant un profil complémentaire de l'espace séparant les différents doigts. L'engagement des doigts disposés en quinconces, dans les ondulations complémentaires, assure un blocage complet de l'extrémité arrière 29.

Plus particulièrement, l'insert est immobilisé longitudinalement grâce à l'appui de la face 30 sur la tranche 28, transversalement grâce au fait que ces doigts viennent chacun en appui latéralement contre un flanc de la tôle de renfort 24, et verticalement grâce aux ondulations de cette tôle de renfort qui constituent des obstacles à un éventuel déplacement vertical de ces doigts.

Ce blocage complet de l'extrémité arrière 29 sur la tôle de renfort 24 améliore l'efficacité de l'insert de rigidification 20 en minimisant ses éventuels déplacements durant un choc.

Comme visible sur les figures, chaque doigt 31, 32 et 33 comprend encore une zone d'encollage, repérées respectivement par 31', 32' et 33'. Lorsque l'insert est monté, chaque zone d'encollage vient en appui contre un flanc de la tôle de renfort 24, dans une ondulation correspondante, pour y être collé efficacement.

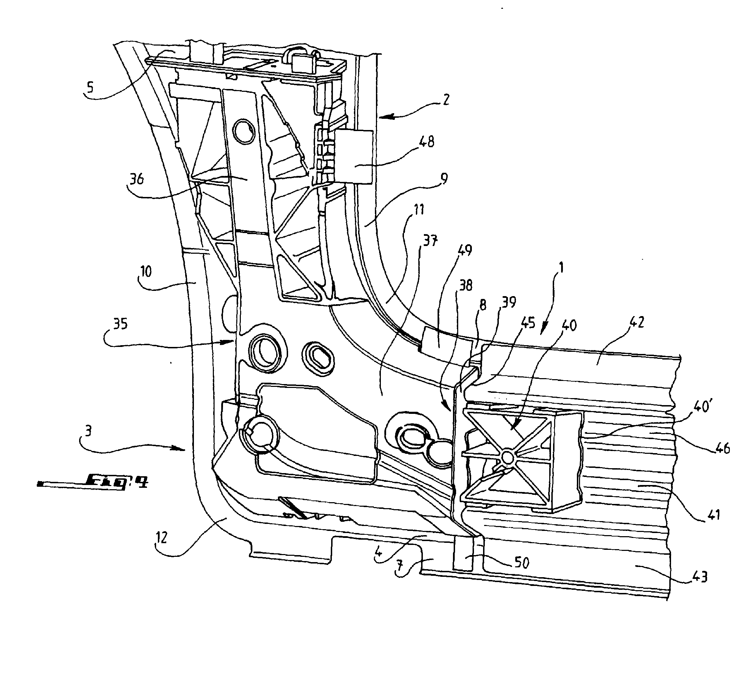

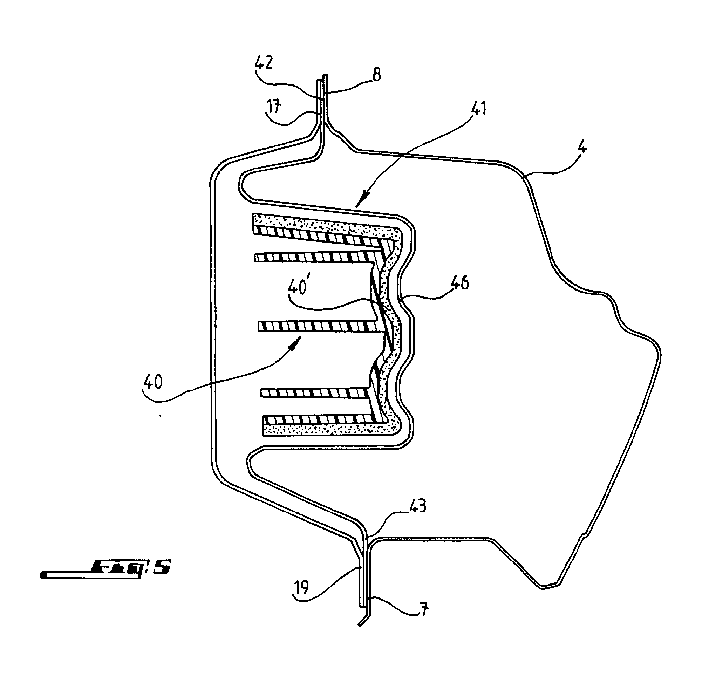

Dans un autre mode de réalisation de l'invention, représenté sur les figures 4 et 5, l'insert repéré par 35, a également une forme générale de L comprenant différentes parois d'encollage 36 et 37.

Son extrémité arrière 38 comprend également une face plane 39 portant un unique doigt de blocage 40 ayant une forme générale parallélépipédique et s'étendant selon une direction normale à la face plane 39.

Une tôle de renfort 41 comprend également un bord supérieur 42 et un bord inférieur 43 par lesquels elle est soudée aux bords du côté de caisse 3. Elle définit une arête 45 qui s'étend dans un plan transversal, et qui est apte à recevoir la face plane arrière 39 de l'insert pour le bloquer.

La tôle de renfort 41 comprend ici une ondulation principale, 46, s'étendant longitudinalement, et ayant une section en U complémentaire de la section du doigt parallélépipédique 40.

Le doigt 40 comprend une surface d'encollage 41, venant en appui contre un flanc de la tôle de renfort 41, dans l'ondulation 46, pour être complètement solidarisé à cette tôle de renfort.

Cet insert 35 comprend encore trois languettes de positionnement, repérées par 48, 49 et 50. Chaque languette de positionnement dépasse du corps principal que constitue l'insert 35, en s'étendant vers l'extérieur pour être située en vis-à-vis d'un bord correspondant du côté de caisse 3.

Lors du montage de l'insert, ces languettes 48, 49, 50 permettent de positionner l'insert 35 transversalement en venant en appui sur les bords correspondants du côté de caisse 3, à savoir, respectivement, les bords 9, 8 et 7.

Après soudage du longeron interne 16, et de la doublure d'aile sur le côté de caisse 3, chaque languette de positionnement est prise entre un bord de la doublure d'aile, ou un bord du longeron interne, et un bord correspondant du côté de caisse pour maintenir l'insert en position médiane dans la cavité.

Dans les deux exemples, l'insert a une forme générale de L pour constituer un renfort de pied avant. Mais l'invention s'applique également à d'autres inserts de rigidification de caisse, comme par exemple un insert de pied central ayant une forme générale correspondant à la lettre T.

## Revendications

1. Insert (20 ; 35) de rigidification pour caisse de véhicule automobile, destiné à être inséré dans une cavité délimitée par au moins deux tôles (3, 16) soudées l'une à l'autre et par une tôle de renfort (24 ; 42) s'étendant entre ces deux tôles (3, 16), cet insert (20 ; 35) ayant une extrémité (29 ; 49) apte à venir en appui contre une tranche (28 ; 45) de la tôle de renfort (24 ; 42), et **caractérisé en ce que** cette extrémité (29 ; 49) porte au moins un doigt de blocage (31, 32, 33 ; 40) apte à venir en appui contre un flanc de la tôle de renfort (24 ; 42).

2. Insert (20 ; 35) selon la revendication 1, dans lequel chaque doigt (31, 32, 33 ; 40) est porté par une face plane (30 ; 39) de l'extrémité (29 ; 49) de l'insert (20 ; 35).

3. Insert (20 ; 35) selon la revendication 1 ou 2, comprenant au moins deux doigts (31, 32, 33) aptes à venir en appui sur deux flancs opposés de la tôle de renfort (24).

4. Insert (20 ; 35) selon la revendication 3, comprenant trois doigts (31, 32, 33) disposés en quinconces.

5. Insert (20 ; 35) selon l'une des revendications précédentes, dans lequel au moins un doigt (31, 32, 33 ; 40) comprend une zone d'encollage (31', 32', 33' ; 40').

6. Insert (20 ; 35) selon l'une des revendications 1 à 5, ayant une forme générale correspondant à la lettre T pour rigidifier une embase de pied milieu de caisse en étant intercalé au moins partiellement entre un côté de caisse (3) et un longeron intérieur (16).

7. Insert (20 ; 35) selon l'une des revendications 1 à 5, ayant une forme générale d'équerre pour rigidifier une embase de pied avant de caisse en étant intercalé au moins partiellement entre un côté de caisse (3) et un longeron intérieur (16).

## Claims

1. Stiffening insert (20; 35) from a motor vehicle body shell, which is intended to be inserted in a cavity delimited by at least two sheets (3, 16) welded together and by a reinforcing sheet (24; 42) extending between these two sheet (3, 16), this insert (20; 35) having one end (29; 49) intended to bear against an edge face (28; 45) of the reinforcing sheet (24; 42) and **characterized in that** this end (29; 49) carries at least one immobilizing finger (31, 32, 33; 40) able to press against a side of the reinforcing sheet (24; 42).

2. Insert (20; 35) according to Claim 1, in which each finger (31, 32, 33; 40) is carried by a flat face (30; 39) of the end (29; 49) of the insert (20; 35).

3. Insert (20; 35) according to Claim 1 or 2, comprising at least two fingers (31, 32, 33) able to press against two opposite sides of the reinforcing sheet (24).

4. Insert (20; 35) according to Claim 3, comprising three fingers (31, 32, 33) arranged in a staggered configuration.

5. Insert (20; 35) according to one of the preceding claims, in which at least one finger (31, 32, 33; 40) comprises an adhesive-coating region (31', 32', 33'; 40').

6. Insert (20; 35) according to one of Claims 1 to 5, having an overall shape corresponding to the letter T to stiffen a body shell centre pillar base by being interposed at least partially between one side of the body shell (3) and an interior longitudinal member (16).

7. Insert (20; 35) according to one of Claims 1 to 5, having the overall shape of an angle bracket to stiffen a body shell front hinge pillar by being interposed at least partially between one side of a body shell (3) and an interior longitudinal member (16).

## Patentansprüche

1. Einlegeteil (20; 35) zur Versteifung für eine Kraftfahrzeug-Karosserie, das dazu bestimmt ist, in einen Hohlraum eingeführt zu werden, der durch mindestens zwei zusammengeschweißte Blechen (3, 16) und durch ein Verstärkungsblech (24; 42) begrenzt wird, das zwischen diesen zwei Blechen (3, 16) verläuft, wobei dieses Einlegeteil (20; 35) ein Ende (29; 49) aufweist, das geeignet ist, gegen einen Abschnitt (28; 45) des Verstärkungsblechs (24; 42) in Auflage zu kommen, **dadurch gekennzeichnet, dass** dieses Ende (29; 49) mindestens einen Blockierfinger (31, 32, 33; 40) trägt, der geeignet ist, gegen eine Flanke des Verstärkungsblechs (24, 42) in Auflage zu kommen.

2. Einlegeteil (20; 35) nach Anspruch 1, wobei jeder Finger (31, 32, 33; 40) von einer Planfläche (30; 39) des Endes (29; 49) des Einlegeteils (20; 35) getragen wird.

3. Einlegeteil (20; 35) nach Anspruch 1 oder 2, umfassend mindestens zwei Finger (31, 32, 33), die geeignet sind, auf zwei gegenüberliegenden Flanken des Verstärkungsblechs (24) in Auflage zu kommen.

4. Einlegeteil (20; 35) nach Anspruch 3, umfassend drei Finger (31, 32, 33), die gegeneinander versetzt angeordnet sind.

5. Einlegeteil (20; 35) nach einem der vorherigen Ansprüche, wobei mindestens ein Finger (31, 32, 33; 40) eine Verklebungszone (31', 32', 33'; 40') aufweist.

6. Einlegeteil (20; 35) nach einem der Ansprüche 1 bis 5, mit einer allgemeinen Form, die dem Buchstaben T entspricht, um einen mittleren Karosserie-Fußboden zu versteifen, indem es mindestens zum Teil zwischen eine Karosserieseite (3) und einem inneren Längsträger (16) eingefügt wird.

7. Einlegeteil (20; 35) nach einem der Ansprüche 1 bis 5, mit einer allgemeinen Form eines Winkelstücks, um einen vorderen Karosserie-Fußboden zu versteifen, indem es mindestens zum Teil zwischen eine Karosserieseite (3) und einem inneren Längsträger (16) eingefügt wird.
